# EUROPEAN PATENT APPLICATION

(11) **EP 4 706 474 A1**
(43) Date of publication of application: **11.03.2026**
(21) Application number: 24815765.3
(22) Date of filing: 21.05.2024
(51) Int. Cl.: A47L 5/22, A47L 5/24, A47L 7/00, A47L 7/02, A47L 9/32, A47L 11/40, B60S 3/04, D06F 75/30, D06F 75/34, A61H 23/02

(54) **CLEANER**

(30) Priority: 31.05.2023 KR 20230070047
(71) Applicant: LG Electronics Inc., Yeongdeungpo-gu Seoul 07336 (KR)
(72) Inventor: HONG, Woo, Seoul 08592 (KR); LEE, Sangik, Seoul 08592 (KR); PARK, Jongho, Seoul 08592 (KR); JANG, Jaewon, Seoul 08592 (KR); LEE, Minwoo, Seoul 08592 (KR); HAN, Jaehun, Seoul 08592 (KR); LEE, Yeongjae, Seoul 08592 (KR)
(74) Representative: Schornack, Oliver
(86) International application number: PCT/KR2024/006847
(87) International publication number: WO 2024/248388

(57) **Abstract**

The present disclosure relates to a cleaner having a bracket, the bracket including a handle coupling portion separably coupled to a coupling surface, and an accessory coupling portion extending from the handle coupling portion in a direction intersecting a direction in which the handle coupling portion is coupled to the coupling surface, the accessory coupling portion being configured such that an accessory module is separably coupled to the accessory coupling portion, such that the corresponding accessory module is mounted on a handle assembly, thereby performing various functions in addition to the function of the cleaner.

## Description

### [Technical Field]

The present disclosure relates to a cleaner, and more particularly, to a portable vacuum cleaner with improved convenience.

### [Background Art]

In general, a cleaner refers to an electrical appliance that draws in small garbage or dust by sucking air using electricity and fills a dust bin provided in a product with the garbage or dust. Such a cleaner is generally called a vacuum cleaner.

The cleaners may be classified into a manual cleaner which is moved directly by a user to perform a cleaning operation, and an automatic cleaner which performs a cleaning operation while autonomously traveling. Depending on the shape of the cleaner, the manual cleaners may be classified into a canister cleaner, an upright cleaner, a handy cleaner, a stick cleaner, and the like.

The canister cleaners were widely used in the past as household cleaners. However, recently, there is an increasing tendency to use the handy cleaner and the stick cleaner in which a dust bin and a cleaner main body are integrally provided to improve convenience of use.

In the case of the canister cleaner, a main body and a suction port are connected by a rubber hose or pipe, and in some instances, the canister cleaner may be used in a state in which a brush is fitted into the suction port.

The handy cleaner (hand vacuum cleaner) has maximized portability and is light in weight. However, because the handy cleaner has a short length, there may be a limitation to a cleaning region. Therefore, the handy cleaner is used to clean a local place such as a desk, a sofa, or an interior of a vehicle.

A user may use the stick cleaner while standing and thus may perform a cleaning operation without bending his/her waist. Therefore, the stick cleaner is advantageous for the user to clean a wide region while moving in the region. The handy cleaner may be used to clean a narrow space, whereas the stick cleaner may be used to clean a wide space and also used to a high place that the user's hand cannot reach. Recently, modularized stick cleaners are provided, such that types of cleaners are actively changed and used to clean various places.

Meanwhile, depending on cleaning methods, the cleaners may be classified into a wet cleaning type cleaner and a dry cleaning type cleaner. The wet cleaning type cleaner cleans a cleaning region while spraying water or steam or cleans a cleaning region by using a wet rag. The dry cleaning type cleaner cleans a cleaning region by sucking dust or scrubs a cleaning region with a brush.

Meanwhile, among wet rags, there is a wet rag provided with a steam generation device configured to generate steam. The steam generation device includes a tank configured to store water therein and generates steam by vaporizing the water stored in the tank. The steam wet rag supplies the generated steam to the rag to disinfect the rag with steam and sterilize bacteria and the like, which are present on the floor, with high-temperature steam.

Korean Patent No. 10-0738478 is provided as Patent Document 1. Patent Document 1 relates to a steam and vacuum composite cleaner. Patent Document 1 discloses a cleaner capable of performing steam cleaning and dust suction.

The cleaner is configured by combining a steam cleaner and a vacuum cleaner and supply power from the steam cleaner to the vacuum cleaner.

According to Patent Document 1, during performing dry cleaning, a user separates a vacuum suction part from a main body and cleans a cleaning region while carrying the vacuum suction part. However, a separate handle needs to be provided in order to carry the vacuum suction part. The separate handle needs to be provided at another position on the vacuum suction part instead of a connection portion of the vacuum suction part connected to the main body, which causes a spatial constraint. In addition, there is a problem in that because of the need for compactness of the entire cleaner, a shape of the handle cannot be ergonomically designed for the user, and the handle needs to be formed in a simple shape such as a ring shape.

In addition, in order to perform wet cleaning, the vacuum suction part equipped with a battery needs to be always coupled to a cleaner main body. For this reason, there is a problem in that an overall weight of the cleaner is increased because of a suction motor disposed in the vacuum suction part, which causes inconvenience. Further, there is a problem in that a volume of the vacuum suction part increases an overall size of the cleaner.

Korean Utility Model Registration No. 20-0489070 is provided as Patent Document 2. Patent Document 2 relates to a rotary rag cleaner capable of adjusting a rotational velocity. Patent Document 2 discloses a wet rag cleaner in which a main battery is provided in a cleaning module, and an auxiliary battery is detachably coupled to an extension tube.

However, Patent Document 2 does not include a dry cleaning module for dry cleaning. Even in case that Patent Document 1 and Patent Document 2 are combined, a compact cleaner having a wet cleaning module and a dry cleaning module cannot be provided, apart from additionally providing a separate battery in the cleaner main body of Patent Document 1 or additionally forming a dust accommodation portion.

Meanwhile, recently, DIY (Do It Yourself) has been in vogue, and DIY refers to products that allow consumers to directly make desired items. In line with this trend, there is a need for an assembly-type cleaner provided with various modules that may be assembled, such that the corresponding modules may be combined to perform various functions.

### [Disclosure]

### [Technical Problem]

The present disclosure has been made in an effort to solve the above-mentioned problem, and an object of the present disclosure is to provide a cleaner in which various accessory modules having specific functions are provided, and the corresponding accessory module is mounted on a handle assembly, thereby performing various functions.

The present disclosure has also been made in an effort to provide a cleaner having a structure in which an accessory module may be easily assembled to a handle assembly.

The present disclosure has also been made in an effort to provide a cleaner having a structure capable of sufficiently supporting an accessory module.

Technical problems of the present disclosure are not limited to the aforementioned technical problems, and other technical problems, which are not mentioned above, may be clearly understood by those skilled in the art from the following descriptions.

### [Technical Solution]

In order to achieve the above-mentioned objects, a cleaner according to the present disclosure includes: a handle assembly having a handle capable of being gripped by a user, the handle assembly having a coupling surface provided at one side of a front surface of the handle assembly; and a bracket having one side separably coupled to the coupling surface, and the other side separably coupled to a specific accessory module. The bracket includes: a handle coupling portion separably coupled to the coupling surface; and an accessory coupling portion extending from the handle coupling portion in a direction intersecting a direction in which the handle coupling portion is coupled to the coupling surface, the accessory coupling portion being configured such that the accessory module is separably coupled to the accessory coupling portion.

The handle assembly may include a support surface disposed to be spaced apart from the coupling surface and configured to support one side of the accessory module, and the accessory module may be supported on at least two points on the handle assembly. In this case, the support surface may support the accessory module in a direction intersecting a direction in which the accessory module is coupled to the accessory coupling portion. Alternatively, the support surface may be disposed rearward of the coupling surface when viewed from a lateral side.

The handle assembly may include a bracket catching portion protruding forward from the coupling surface and at least partially inserted into the bracket. In this case, the bracket catching portion may extend in parallel with an extension direction of the accessory coupling portion when viewed from a front side.

The accessory module may include: an output part; and a rotary motor configured to rotate the output part about a rotary shaft.

The accessory module may include: an output part; and a vibration generator configured to generate a vibration and apply the vibration to the output part.

The accessory module may include: an output part; and a heater configured to generate heat and apply the heat to the output part.

In order to achieve the above-mentioned objects, a cleaner according to the present disclosure includes: a handle assembly having a handle capable of being gripped by a user, the handle assembly having a coupling surface provided at one side of a front surface of the handle assembly; a bracket having one side separably coupled to the coupling surface, and the other side separably coupled to a specific accessory module; and an accessory module having one side coupled to the bracket, and the other side supported by the handle assembly. The handle assembly may include a support surface disposed on a front surface of the handle assembly, disposed to be spaced apart from the coupling surface, and configured to support one side of the accessory module.

The bracket may include: a handle coupling portion separably coupled to the coupling surface; and an accessory coupling portion extending from the handle coupling portion toward the support surface and configured such that the accessory module is separably coupled to the accessory coupling portion.

The support surface may be disposed rearward of the coupling surface when viewed from a lateral side.

The handle assembly may include a bracket catching portion protruding forward from the coupling surface and at least partially inserted into the bracket. The bracket catching portion may extend toward the support surface.

Other detailed matters of the exemplary embodiment are included in the detailed description and the drawings.

### [Advantageous Effects]

The cleaner of the present disclosure has one or more of the following effects.

First, the accessory module is provided with the rotary member configured to rotate the output part, the vibration generator configured to apply a vibration to the output part, or the heater configured to apply heat to the output part, and the accessory module is separably mounted on the handle assembly. Therefore, the corresponding accessory module is mounted on the handle assembly, such that various functions, such as vehicle polishing, human body massage, or ironing, may be performed in addition to the cleaning function.

Second, the accessory coupling portion of the bracket extends from the handle coupling portion in the direction intersecting the direction in which the handle coupling portion is coupled to the module coupling portion, such that the accessory module may be easily assembled to the handle assembly.

Third, the support surface is disposed to be spaced apart from the module coupling portion, one side of the accessory module is coupled to the bracket coupled to the module coupling portion, and the other side of the accessory module is supported on the support surface, such that the accessory module may be supported on at least two points by the handle assembly and stably coupled to the handle assembly.

The effects of the present disclosure are not limited to the aforementioned effects, and other effects, which are not mentioned above, will be clearly understood by those skilled in the art from the claims.

### [Description of Drawings]

FIG. 1 is a perspective view of a cleaner according to the present disclosure.
FIG. 2 is a view illustrating a state in which a main body and a dust bin are separated, and a handle assembly is connected directly to an extension tube in FIG. 1.
FIG. 3 is a perspective view of the handle assembly to which a bracket according to the embodiment is coupled.
FIG. 4 is a front view of the handle assembly in FIG. 3.
FIG. 5 is a right side view of the handle assembly in FIG. 3.
FIG. 6 is a perspective view of the handle assembly to which a bracket according to another embodiment is coupled.
FIG. 7 is a front view of the handle assembly in FIG. 6.
FIG. 8 is a right side view of the handle assembly in FIG. 6.
FIG. 9 is a top plan view of the handle assembly in FIG. 6.
FIG. 10 is an exploded view of the handle assembly in FIG. 6.
FIG. 11 is a view illustrating a scrub module coupled to the handle assembly in FIG. 6.
FIG. 12 is a view illustrating a massage module coupled to the handle assembly in FIG. 6.
FIG. 13 is a view illustrating an ironing module coupled to the handle assembly in FIG. 6.

### [Mode for Invention]

Hereinafter, exemplary embodiments of the present disclosure will be described in detail with reference to the accompanying drawings.

First, main constituent elements of a cleaner 100 will be briefly described.

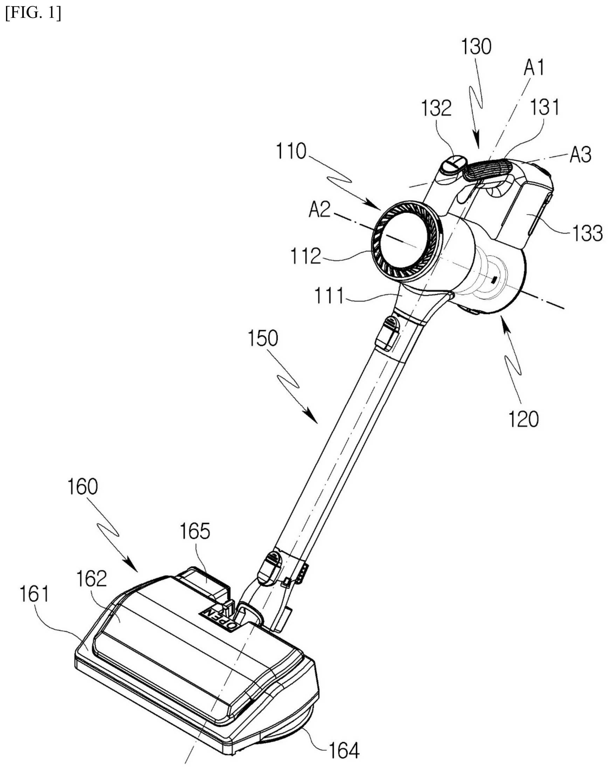

FIG. 1 is a perspective view of the cleaner 100 according to the present disclosure.

The cleaner 100 may refer to a cleaner configured to be manually operated by the user. For example, the cleaner 100 may refer to a handy cleaner or a stick cleaner.

The cleaner 100 may include a main body 110. The main body 110 is a constituent element that has a suction motor 114 provided therein and provides a suction force during dry cleaning.

The main body 110 is separably coupled to a cleaning module 160. Specifically, the main body 110 may be connected directly to the cleaning module 160 or indirectly connected to the cleaning module 160 through an extension tube 150. A suction part 111 of the main body is coupled to the cleaning module 160 or the extension tube 150. For example, the main body 110 may be coupled to the cleaning module 160 during dry cleaning, and the main body 110 may be separated from the cleaning module 160 during wet cleaning.

In case that a suction port is provided in the cleaning module 160, the suction motor 114 provides a suction force to the cleaning module 160. In case that the cleaning module is divided into the wet cleaning module 160, which is illustrated in the drawings, and a non-illustrated dry cleaning module (not illustrated), the suction motor 114 provides a suction force to the dry cleaning module.

The main body 110 may be connected to the extension tube 150. The main body 110 may be connected to the cleaning module 160 through the extension tube 150. During the dry cleaning, the main body 110 may generate a suction force by means of the suction motor 114 and provide the suction force to the cleaning module 160 through the extension tube 150. In this case, outside dust may be introduced into the main body 110 through the cleaning module 160 and the extension tube 150.

The main body 110 defines an external shape and accommodates therein the main constituent elements. The main body 110 may be provided with the suction part 111, a discharge part 112, a dust separating part (not illustrated), the suction motor 114, and a filter (not illustrated).

A centerline A1 is defined with reference to FIG. 1. With reference to FIG. 1, the imaginary centerline A1, which penetrates a center of the extension tube 150, may be defined. The centerline A1 is disposed in a longitudinal direction of the extension tube 150. An angle of the centerline A1 may be changed by a manipulation of a user.

A center of gravity of the cleaner 100 may be disposed on the centerline A1 when viewed from the front side. The suction motor 114 and a first battery 140 are disposed along the centerline A1 in the main body 110 of the cleaner. Therefore, a center of gravity of the main body 110 of the cleaner is disposed on the centerline A1. This arrangement prevents the cleaner 100 from being biased toward one side, such that the user may easily manipulate the cleaner 100.

The suction part 111 is a hole through which dust-containing air is introduced into the main body 110 during the dry cleaning.

With reference to FIG. 1, the suction part 111 is coupled to the extension tube 150. Alternatively, although not illustrated, the suction part 111 may be coupled directly to the cleaning module 160.

The suction part 111 may be disposed in a direction of the centerline A1.

The discharge part 112 is a hole through which dust in the main body 110 is discharged to the outside during the dry cleaning.

With reference to FIG. 1, the discharge part 112 is provided on an upper surface of the main body 110.

The suction part 111 and the discharge part 112 may be provided in different directions. Specifically, the suction part 111 may be disposed toward a front side of the main body 110, and the discharge part 112 may be disposed toward an upper side of the main body 110.

The dust separating part (not illustrated) communicates with the extension tube 150. The dust separating part may separate dust sucked into the dust separating part through the extension tube 150.

The dust separating part may communicate with a dust bin 120. More specifically, the dust separating part may be disposed in the dust bin 120. Therefore, the dust separated by the dust separating part is collected in the dust bin 120, and the air is discharged to the outside of the dust separating part.

The dust separating part may be a cyclone part capable of separating dust using a cyclone flow. Therefore, air and dust, which are sucked through the extension tube 150, spirally flow along an inner circumferential surface of the dust separating part. Therefore, the cyclone flow may be generated about a central axis of the dust separating part.

The suction motor 114 is a constituent element configured to generate a suction force for sucking air.

With reference to FIG. 1, the suction motor 114 is accommodated in the main body 110. The suction motor 114 generates a suction force while rotating.

With reference to FIG. 1, the suction motor 114 is disposed above the dust bin 120. With this arrangement, a part of the dust in the air sucked into the suction motor 114 is collected in the dust bin 120 by gravity, which increases a lifespan of the suction motor 114.

With reference to FIG. 1, the suction motor 114 is disposed at a downstream side of the dust bin 120. With this arrangement, the air filtered by the dust bin 120 passes through the suction motor 114. Therefore, the lifespan of the suction motor 114 increases in comparison with a case in which the suction motor 114 is disposed at an upstream side of the dust bin 120.

The filter (not illustrated) is a constituent element configured to filter out foreign substances contained in the flowing air. The filter may include a prefilter or a HEPA filter.

The prefilter is a filter disposed at the most upstream side among the filters. The prefilter is formed in a mesh shape and primarily filters out physically large dust. The prefilter is a constituent element that physically filters out dust larger than intervals between the meshes, thereby improving lifespans of the other filters.

The HEPA filter refers to a high-efficiency particulate air filter that is a constituent element that filters out fine dust. In general, the HEPA filter filters out fine dust by means of an electrostatic force. The HEPA filter filters out fine dust contained in the dust introduced from the dust bin 120, thereby preventing fine dust from being discharged to the outside of the cleaner 100. The HEPA filter is disposed at a downstream side of the prefilter, which increases a lifespan.

The filter may be disposed at a downstream side of the suction motor 114. The filter may be disposed at an upstream side or a downstream side of the suction motor 114. However, with reference to FIG. 1, the filter may be disposed at the downstream side of the suction motor 114. In other words, the filter may be disposed above the suction motor 114. This is intended to allow the user to easily replace the filter.

The cleaner 100 includes a handle assembly 130. The handle assembly 130 is a constituent element configured to be gripped by a user.

The handle assembly 130 has a handle 131 that may be gripped by the user. A coupling surface 137 is provided at one side of a front surface of the handle assembly 130.

The handle assembly 130 is coupled to the main body 110 when the main body 110 is coupled to the cleaning module 160. The handle assembly 130 is coupled to the cleaning module 160 when the main body 110 is separated from the cleaning module 160. Specifically, the handle assembly 130 may be coupled to the main body 110, coupled to the extension tube 150, or coupled to the cleaning module 160.

The handle assembly 130 includes the handle 131 that may be gripped by the user.

The handle assembly 130 has an operating part 132 configured to transfer an instruction to the cleaning module 160 or the main body 110.

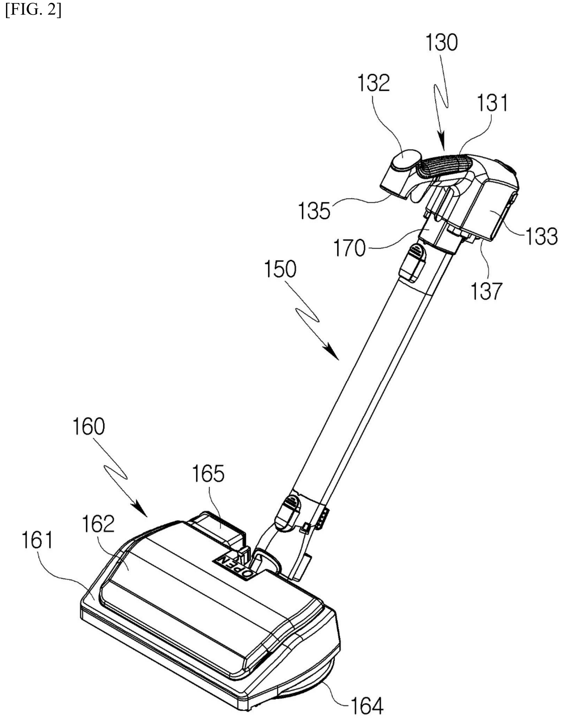

With reference to FIGS. 1 and 2, the wet cleaning may be performed when the handle assembly 130 is coupled to the cleaning module 160.

Specifically, during the wet cleaning, the cleaning module 160 and the extension tube 150 are coupled, and the extension tube 150 and the cleaning module 160 are coupled. Alternatively, the cleaning module 160 and the handle assembly 130 may be coupled. With this arrangement, a weight of the main body 110 and a weight of the dust bin in an assembly of the cleaner 100 are reduced, which allows the user to more easily carry the cleaner 100. In addition, the amount of electric power basically transmitted to the main body 110 is reduced, which improves operating time.

During the dry cleaning, the cleaning module 160 and the extension tube 150 are coupled, the extension tube 150 and the main body 110 are coupled, and the main body 110 and the cleaning module 160 are coupled. Alternatively, the cleaning module 160 and the main body 110 may be coupled, and the main body 110 and the handle assembly 130 may be coupled.

When the dry cleaning and the wet cleaning are simultaneously performed, in the same way as the dry cleaning, the cleaning module 160 and the extension tube 150 are coupled, the extension tube 150 and the main body 110 are coupled, and the main body 110 and the cleaning module 160 are coupled. Alternatively, the cleaning module 160 and the main body 110 may be coupled, and the main body 110 and the handle assembly 130 may be coupled.

The handle assembly 130 according to the embodiment will be described.

The handle assembly 130 according to the embodiment includes the handle 131, the operating part 132, and a battery accommodation part 133.

The handle 131 may be formed to be gripped.

The handle 131 according to the embodiment may be formed in a shape similar to a cylindrical shape. Alternatively, the handle 131 may be formed in a curved cylindrical shape.

Meanwhile, in the present embodiment, an imaginary handle axis A3 may be formed by extending a central axis of the handle 131.

The handle axis A3 intersects the centerline A1.

The handle axis A3 is disposed on the centerline A1 when viewed from the front side. Therefore, when the user grips the handle 131, the user may easily manipulate the cleaner 100 without tilting the cleaner 100 toward one side.

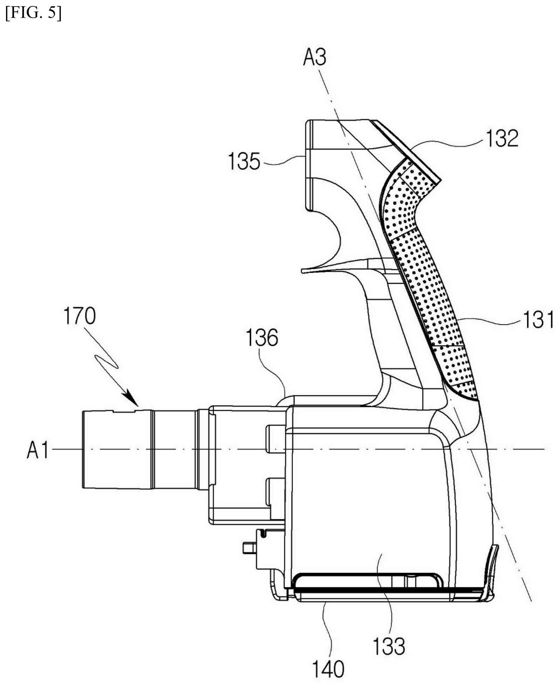

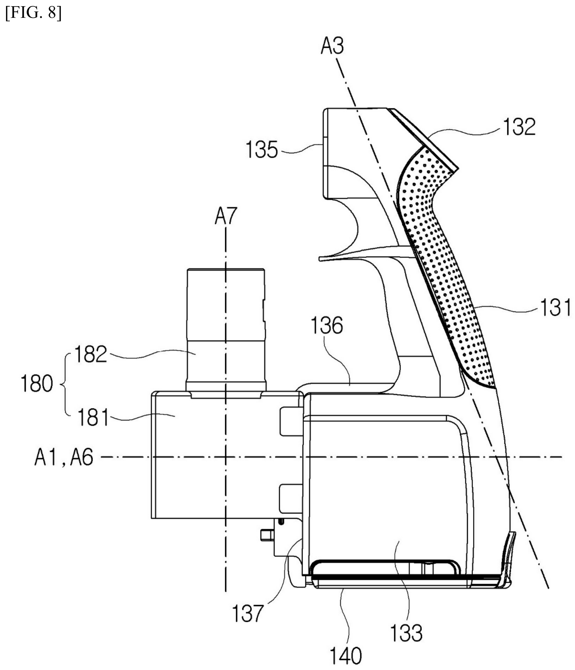

With reference to FIGS. 5 and 8, the handle axis A3 intersects the centerline A1 when viewed from one side. Specifically, the handle axis A3 is disposed below the handle 131 and intersects the centerline A1. With this arrangement, the user may support the handle 131 with the side of the hand and manipulate the cleaner 100 by applying a force to the handle 131 with the index finger. Because the index finger provides a stronger force than the little finger, the operational characteristics of the cleaner 100 may be improved.

An upper end of the axis A3 of the handle is disposed forward of a lower end of the axis A3 of the handle. With this arrangement, during the cleaning process, the axis A3 of the handle may be disposed in parallel with a ground surface, such that the user may ergonomically easily grip the handle 131 and readily operate the cleaner 100.

The operating part 132 is a constituent element that receives instructions from the user. The operating part 132 is disposed on the handle assembly.

The operating part 132 is disposed at an upper end of the handle 131.

A front end of the operating part 132 may be disposed above a rear end of the operating part 132. With this arrangement, the user may press the operating part 132 with the thumb while gripping the handle.

The battery accommodation part 133 is a constituent element configured to define a space in which the first battery 140 is installed. The battery accommodation part 133 is coupled to one side of the handle 131, and the first battery 140 is installed in the battery accommodation part 133.

The battery accommodation part 133 is disposed at a lower end of the handle 131.

A lower side of the battery accommodation part 133 may open, and the first battery 140 may be inserted into the battery accommodation part 133 while moving upward from below.

The first battery 140 is a constituent element configured to supply power to the constituent elements of the cleaner 100 including the suction motor 114.

With reference to FIG. 1, the first battery 140 is disposed below the handle 131.

For example, the first battery 140 may be separably coupled to the cleaner 100. The first battery 140 may be inserted and mounted upward and detached downward.

The first battery 140 may be disposed rearward of the dust bin 120. That is, the suction motor 114 and the first battery 140 may be disposed so as not to overlap each other in the upward/downward direction and disposed at different disposition heights. Based on the handle 131, the suction motor 114, which is heavy in weight, is disposed forward of the handle 131, and the first battery 140, which is heavy in weight, is disposed below the handle 131, such that an overall weight of the cleaner 100 may be uniformly distributed. Therefore, it is possible to prevent stress from being applied to the user's wrist when the user grips the handle 131 and performs the cleaning operation.

The handle assembly 130 includes module coupling portions 134 and the coupling surface 137. The module coupling portion 134 and the coupling surface 137 are portions where the handle assembly 130 is connected to the cleaning module 160.

The coupling surface 137 refers to a surface to which the cleaning module 160, the extension tube 150, brackets 170 and 180, and the like may be coupled. The coupling surface 137 is formed at one side of the front surface of the handle assembly 130.

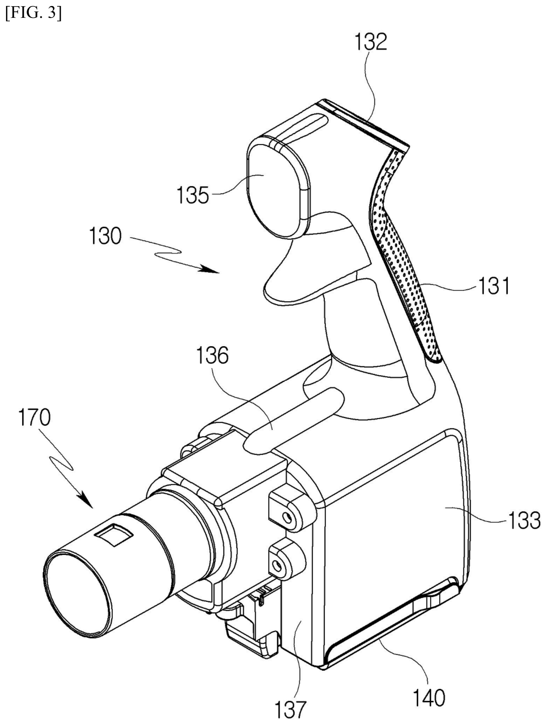

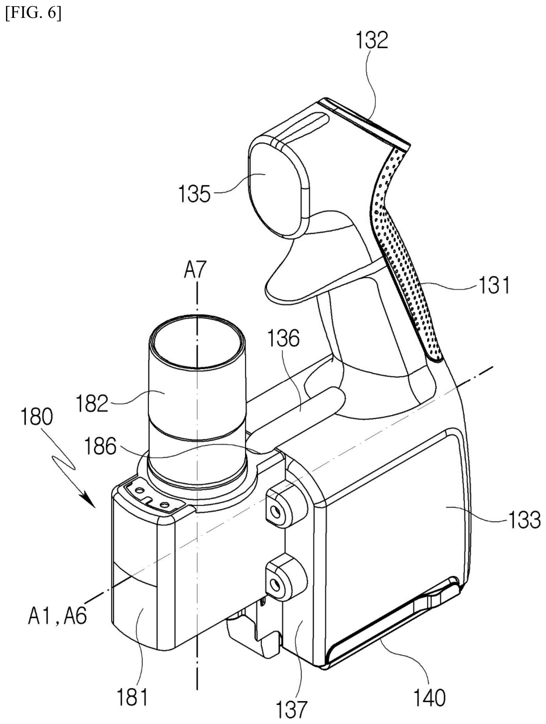

With reference to FIGS. 3 and 6, the coupling surface 137 is formed on the front surface of the handle assembly 130. Specifically, the coupling surface 137 may be disposed on a lower half portion of the front surface of the handle assembly 130.

The module coupling portion 134 refers to a constituent element that may be fastened to the cleaning module 160, the extension tube 150, the brackets 170 and 180, and the like. The module coupling portion 134 is formed on the coupling surface 137.

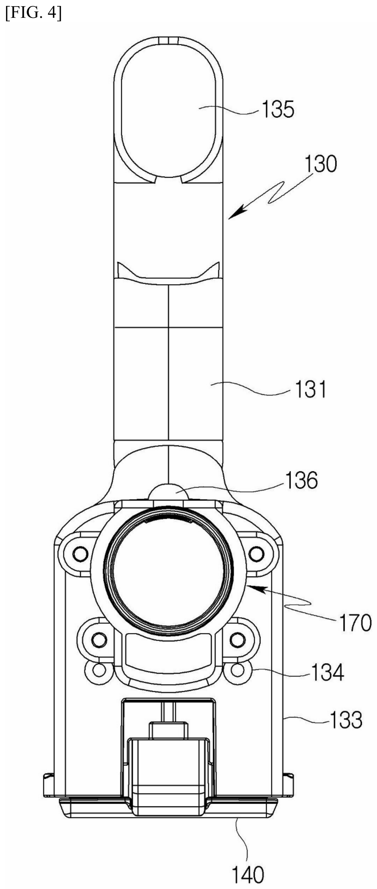

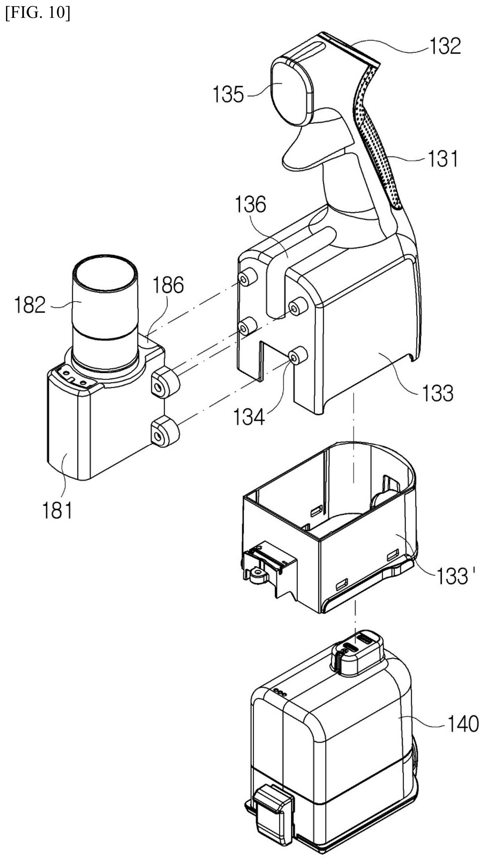

With reference to FIGS. 4 and 10, the module coupling portion 134 is formed on the front surface of the handle assembly 130. Specifically, the module coupling portion 134 may be disposed on the lower half portion of the front surface of the handle assembly 130.

The module coupling portion 134 is coupled to the cleaning module 160. With reference to FIG. 2, the module coupling portion 134 may be coupled indirectly to the cleaning module 160 by means of the extension tube 150. Alternatively, although not illustrated, the module coupling portion 134 may be coupled directly to the cleaning module 160.

The module coupling portion 134 is formed on the front surface of the handle assembly 130. Specifically, the module coupling portion 134 is formed on the front surface of the battery accommodation part 133.

The module coupling portion 134 is disposed below the handle 131, and the operating part 132 is disposed above the handle 131. With this arrangement, in case that the user presses the operating part 132, the moment of force is generated counterclockwise (CCW) based on FIGS. 5 and 8 and presses a bottom of the cleaning module 160, such that the cleaner 100 may be stably manipulated.

With reference to FIG. 2, the module coupling portion 134 is coupled to a first bracket 170, and the first bracket 170 is coupled to the cleaning module 160 or the extension tube 150, such that the coupling portion 134 is coupled indirectly to the cleaning module 160 or the extension tube 150.

The module coupling portion 134 may be screw-coupled to the first bracket 170, and the first bracket 170 may be hook-coupled to the cleaning module 160 or the extension tube 150.

A bracket catching portion 136 is formed on the coupling surface 137. The bracket catching portion 136 is a constituent element configured to guide the bracket 170 or 180 to an exact position.

The bracket catching portion 136 protrudes forward from the coupling surface 137. The bracket catching portion 136 is caught by a catching groove 176 or 186 of the bracket 170 or 180.

The bracket catching portion 136 extends downward from an upper end of the coupling surface 137.

The bracket catching portion 136 extends rearward from the upper end of the coupling surface 137. Specifically, the bracket catching portion 136 is formed in an 'L' shape. Therefore, the bracket catching portion 136 has a rib function, thereby preventing damage to the battery caused by deformation of the battery accommodation part 133 caused by the weight of the cleaning module 160.

The handle assembly 130 includes a support surface 135. The support surface 135 is a constituent element configured to support the main body 110 of the cleaner or one of accessory modules 160b, 160c, and 160d.

The support surface 135 is disposed to be spaced apart from the coupling surface 137 and configured to support one side of one of the accessory modules 160b, 160c, and 160d. The accessory modules 160b, 160c, and 160d are each supported on at least two points on the handle assembly 130.

The support surface 135 is formed on the front surface of the handle assembly 130. The support surface 135 is disposed in parallel with the coupling surface 137.

The support surface 135 is disposed above the coupling surface 137. Specifically, the support surface 135 is disposed on an upper half portion of the handle 131, and the coupling surface 137 is disposed on the lower half portion of the handle 131. With this arrangement, the assembly of the main body 110 and the dust bin are stably supported on two points by the support surface 135 and the coupling surface 137.

The cleaner 100 further includes the brackets 170 and 180. The bracket 170 or 180 is a constituent element configured to connect the handle assembly 130 and the cleaning module 160, connect the handle assembly 130 and the extension tube 150, or connect the handle assembly 130 and one of the accessory modules 160b, 160c, and 160d.

The bracket 170 or 180 includes the first bracket 170 or a second bracket 180. Specifically, the first bracket 170 or the second bracket 180 is selectively coupled to the handle assembly 130. Hereinafter, the first bracket 170 will be described first, and the second bracket 180 will be described later. Meanwhile, the description of the first bracket 170 may be applied to the second bracket 180 within a range that does not cause conflict.

One side of the first bracket 170 is coupled to the cleaning module 160, and the other side of the first bracket 170 is coupled to the handle assembly 130.

A rear surface of the first bracket 170 faces the coupling surface 137 and is screw-coupled to the coupling portion 134 disposed on the coupling surface 137.

The first bracket 170 extends forward from the rear side, and a front end of the first bracket 170 is coupled to the cleaning module 160 or the extension tube 150 by a hook engagement. Specifically, with reference to FIG. 3, the first bracket 170 is coupled to the extension tube 150, and the extension tube 150 is coupled to the cleaning module 160. On the contrary, although not illustrated, the first bracket 170 may be coupled directly to the cleaning module 160.

The first bracket 170 includes the catching groove 176 into which the bracket catching portion 136 is inserted. The catching groove 176 is formed in the rear surface of the first bracket 170 and recessed forward.

The first bracket 170 is coupled to the handle assembly 130 when the handle assembly 130 is coupled to the cleaning module 160 or the extension tube 150. The first bracket 170 is separated from the handle assembly 130 when the handle assembly 130 is coupled to the main body 110.

An additional battery (not illustrated) may be installed, selectively or together with the first battery 140, in the battery accommodation part 133. The battery accommodation part 133 may have a space for accommodating a plurality of batteries. Only the first battery 140 may be installed in the battery accommodation part 133, or the first battery 140 and the additional battery may be simultaneously installed in the battery accommodation part 133. In case that the first battery 140 and the additional battery are simultaneously installed in the battery accommodation part 133, the operating time of the cleaner 100 may be improved.

The first battery 140 and the additional battery may be connected in series, thereby increasing an output.

Alternatively, the first battery 140 and the additional battery may be connected in parallel, thereby improving only the operating time with the same output.

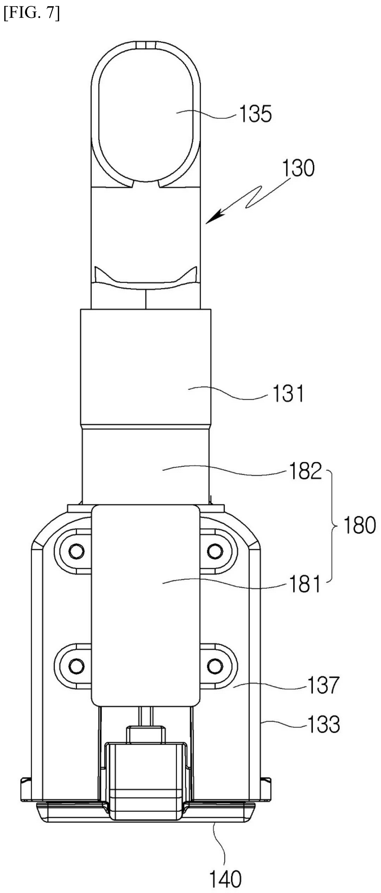

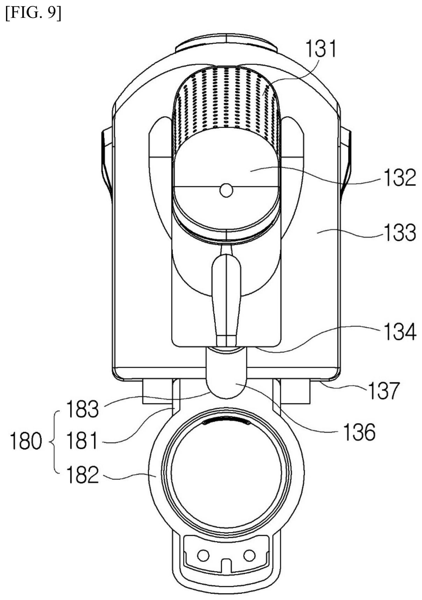

Hereinafter, the second bracket 180 will be described with reference to FIGS. 6 to 13. The description of the first bracket 170 may be applied to the second bracket 180 within a range that does not cause conflict.

One side of the second bracket 180 is separably coupled to the coupling surface 137, and the other side of the second bracket 180 is separably coupled to a specific module among the accessory modules 160b, 160c, and 160d. With reference to FIG. 6, a rear surface of the second bracket 180 is separably coupled to the coupling surface 137, and an upper end of the second bracket 180 is separably coupled to the specific module among the accessory modules 160b, 160c, and 160d.

The second bracket 180 may include a handle coupling portion 181 and an accessory coupling portion 182.

The handle coupling portion 181 is a portion of the second bracket 180 coupled to the handle assembly 130.

The handle coupling portion 181 is separably coupled to the coupling surface 137. With reference to FIG. 6, a rear surface of the handle coupling portion 181 is coupled to the coupling surface 137 of the handle assembly 130.

A terminal may be provided on the handle coupling portion 181, electrically connected to a terminal provided on the coupling surface 137, and supplied with electric power from the battery.

The accessory coupling portion 182 is a portion of the second bracket 180 to which one of the accessory modules 160b, 160c, and 160d is coupled.

The accessory coupling portion 182 extends from the handle coupling portion 181 and extends in a direction intersecting a direction in which the handle coupling portion 181 is coupled to the coupling surface 137. One of the accessory modules 160b, 160c, and 160d is separably coupled to the accessory coupling portion 182.

With reference to FIG. 6, the accessory coupling portion 182 extends upward from an upper surface of the handle coupling portion 181. Specifically, the handle coupling portion 181 is coupled to the coupling surface 137 while moving rearward from the front side, and one of the accessory modules 160b, 160c, and 160d is coupled to the accessory coupling portion 182 while moving downward from above.

The accessory coupling portion 182 is coupled by being at least partially inserted into a lower surface of each of the accessory modules 160b, 160c, and 160d.

The accessory coupling portion 182 extends in the direction intersecting the direction in which the handle coupling portion 181 is coupled to the coupling surface 137, and one of the accessory modules 160b, 160c, and 160d is coupled to the accessory coupling portion 182 in the direction intersecting the direction in which the handle coupling portion 181 is coupled to the coupling surface 137, such that the constituent elements are easily coupled, and the constituent elements are not arbitrarily separated.

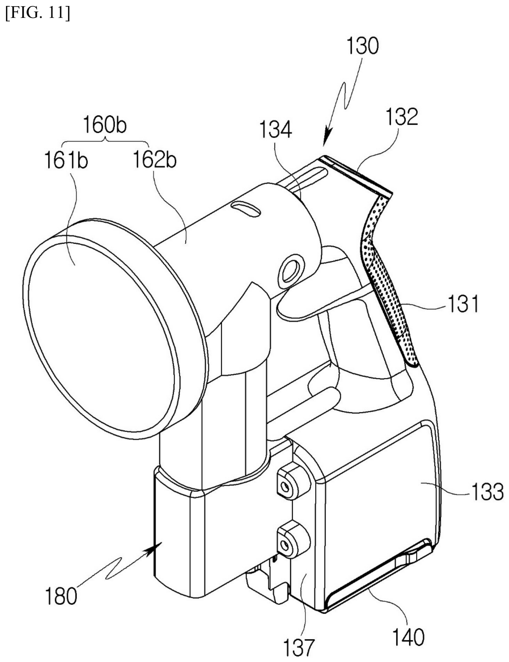

The support surface 135 is disposed to be spaced apart from the coupling surface 137 and configured to support one side of one of the accessory modules 160b, 160c, and 160d. Therefore, the accessory modules 160b, 160c, and 160d are each supported on at least two points on the handle assembly 130. With reference to FIGS. 11 to 13, a lower end of each of the accessory modules 160b, 160c, and 160d is coupled to the accessory coupling portion 182, and an upper end of each of the accessory modules 160b, 160c, and 160d is supported on the support surface 135, such that the accessory modules 160b, 160c, and 160d may be easily coupled to the handle assembly 130 and stably supported.

The support surface 135 supports one of the accessory modules 160b, 160c, and 160d in a direction intersecting a direction in which one of the accessory modules 160b, 160c, and 160d is coupled to the accessory coupling portion 182. The accessory modules 160b, 160c, and 160d are each coupled to the accessory coupling portion 182 while moving downward from above the second bracket 180. The support surface 135 supports one of the accessory modules 160b, 160c, and 160d forward from the rear side. The direction, in which one of the accessory modules 160b, 160c, and 160d is inserted into the accessory coupling portion 182, is different from the direction in which one of the accessory modules 160b, 160c, and 160d is supported by the support surface 135, such that the constituent elements are not arbitrarily separated during the operation.

The support surface 135 is disposed rearward of the coupling surface 137 when viewed from the lateral side. With reference to FIG. 8, the support surface 135 is disposed rearward of the coupling surface 137. Therefore, the accessory modules 160b, 160c, and 160d are each easily coupled to the second bracket 180 and stably supported by the handle assembly 130.

The bracket catching portion 136 protrudes forward from the coupling surface 137 and is at least partially inserted into the second bracket 180. With reference to FIGS. 6 and 10, the bracket catching portion 136 protrudes forward from the coupling surface 137 and is at least partially inserted into the catching groove 186 formed in the second bracket 180. The catching groove 186 is formed to be recessed forward from the rear surface of the second bracket 180. The catching groove 186 is matched in shape with the bracket catching portion 136. The bracket catching portion 136 prevents the second bracket 180 from arbitrarily swaying when the second bracket 180 is coupled to the coupling surface 137.

The bracket catching portion 136 extends in parallel with the extension direction of the accessory coupling portion 182 when viewed from the front side. The bracket catching portion 136 extends toward the support surface 135. With reference to FIGS. 6 and 10, the accessory coupling portion 182 extends upward from the handle coupling portion 181, and the bracket catching portion 136 extended upward and downward. One of the accessory modules 160b, 160c, and 160d is coupled to the second bracket 180 while moving downward from above the second bracket 180. The coupling direction of the second bracket 180 is different from the direction in which the first bracket 170 is coupled while moving rearward from the front side.

With this arrangement, when one of the accessory modules 160b, 160c, and 160d is coupled to the second bracket 180, the second bracket 180 may arbitrarily rotate clockwise or counterclockwise when viewed from the front side. In order to prevent such arbitrary rotation, the bracket catching portion 136 may extend in parallel with the extension direction of the accessory coupling portion 182.

With reference to FIG. 11, the accessory module may be a vehicle polishing module 160b.

The accessory module 160b may include an output part 161b and a rotary motor 162b.

The output part 161b may be a rag plate. The output part 161b may rotate to remove debris by rubbing an outer skin of a vehicle. In this case, a rag may be detachably attached to a front surface of the output part 161b, and the output part 161b may rub the outer skin of the vehicle.

The rotary motor 162b rotates the output part 161b about a rotary shaft. The rotary shaft may be disposed forward and rearward.

The output part 161b may be disposed forward of the support surface 135. In this case, a load is applied to the output part 161b, and the accessory module 160b disposed rearward of the output part 161b is supported by the support surface 135, such that a sufficient frictional force may be applied to the outer skin of the vehicle, and the outer skin of the vehicle may be polished and cleaned.

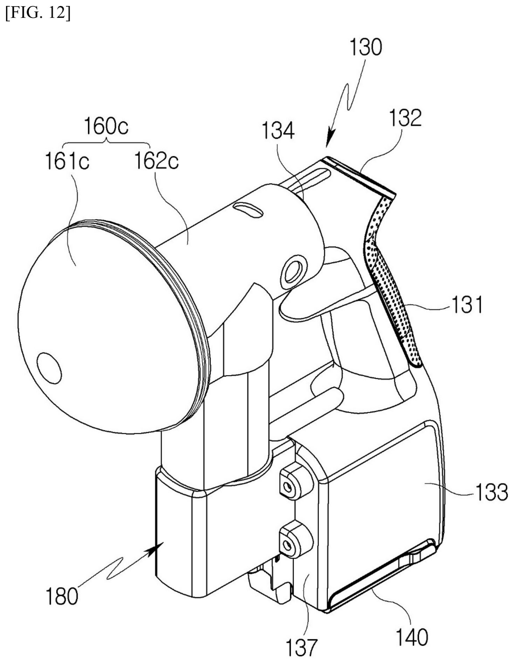

With reference to FIG. 12, the accessory module 160c may be a massage module.

The accessory module 160c may include an output part 161c and a vibration generator 162c.

The output part 161c may be a rigid body. The output part 161c is brought into close contact with a human body and applies acupressure to meridian points. As illustrated in FIG. 12, the output part 161c may be formed in a hemispherical shape. However, the present disclosure is not necessarily limited thereto.

The vibration generator 162c generates a vibration and applies the vibration to the output part 161c.

The output part 161c may be disposed forward of the support surface 135. In this case, a load is applied to the output part 161c, and the accessory module 160c disposed rearward of the output part 161c is supported by the support surface 135, such that the human body may be sufficiently pressed, thereby enabling effective acupressure.

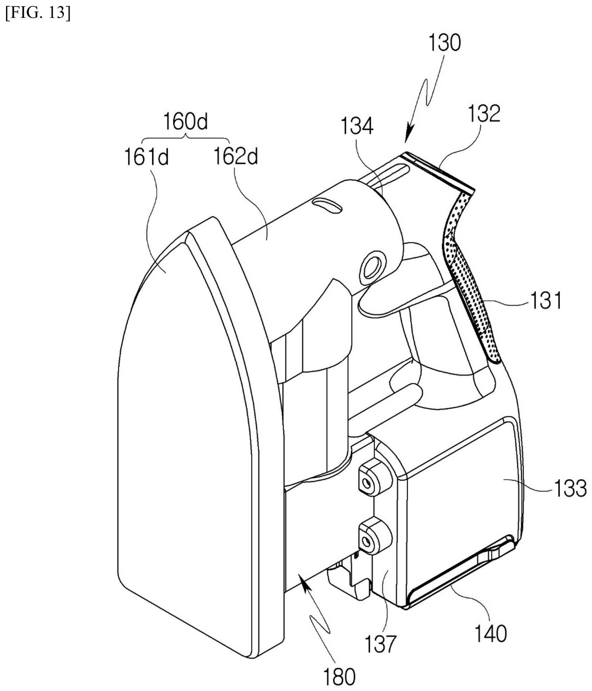

With reference to FIG. 13, the accessory module 160d may be an ironing module.

The accessory module 160d may include an output part 161d and a heater 162d.

The output part 161d may be a heating plate. The output part 161d may extend upward and downward and be formed in a flat plate-like shape having a large front surface. A front surface of the output part 161d is brought into close contact with clothing, thereby allowing the clothing to be ironed.

The heater 162d generates heat and applies the heat to the output part 161d.

The output part 161d may be disposed forward of the support surface 135. In this case, a load is applied to the output part 161d, and the accessory module 160d disposed rearward of the output part 161d is supported by the support surface 135, such that sufficient pressure may be applied to the clothing, thereby enabling effective ironing.

The cleaner 100 may include the dust bin 120. The dust bin 120 may communicate with the dust separating part (not illustrated). The dust bin 120 may store the dust separated by the dust separating part.

A lower side of the dust bin 120 may have an opening portion and be partially opened. The dust bin 120 includes a discharge cover configured to open or close the opened lower side.

The discharge cover (not illustrated) is a constituent element that covers the opened lower side of the dust bin 120. The dust bin 120 collects dust into the dust bin 120 when the cleaner 100 operates. After the cleaner 100 operates, the dust bin 120 is opened to discharge the collected dust only when necessary.

The discharge cover may be disposed at the lower side of the dust bin 120. The discharge cover may selectively open or close the lower side of the dust bin 120 opened downward.

With reference to FIG. 1, the dust bin 120 is disposed on a central axis A2 of the main body when viewed from the front side.

With reference to FIG. 1, the cleaner 100 includes the extension tube 150. The extension tube 150 is a constituent element configured to guide the air, which is sucked from the cleaning module 160, to the main body 110.

A front end of the extension tube 150 is coupled to the cleaning module 160, and a rear end of the extension tube 150 is selectively coupled to any one of the main body 110 and the handle assembly 130.

One end of the extension tube 150 communicates with the cleaning module 160, and the other end of the extension tube 150 communicates with the main body 110. The extension tube 150 may communicate with the suction part 111 of the main body 110. The extension tube 150 is formed in a long cylindrical shape.

The centerline A1 defined in the longitudinal direction of the extension tube 150.

The cleaner 100 includes the cleaning module 160. The cleaning module 160 is a constituent element configured to clean the cleaning region.

With reference to FIG. 1, the cleaning module 160 communicates with the extension tube 150. Therefore, during the dry cleaning, the outside air is introduced into the main body 110 of the cleaner 100 via the cleaning module 160 and the extension tube 150 by the suction force generated in the main body 110 of the cleaner 100.

The cleaning module includes a cleaning module casing 161. The cleaning module casing 161 defines an external shape of the cleaning module and has therein a space.

With reference to FIG. 1, the cleaning module 160 includes at least one rag 164. The rag 164 is a constituent element that contains moisture and rubs and cleans the floor.

The rag 164 performs the wet cleaning by being supplied with water from a water tub 162.

A pair of rags 164 may be disposed at left and right sides of the cleaning module 160.

The rag 164 has a rotary shaft disposed perpendicularly to the floor. The rag 164 rotates about the rotary shaft and rubs and cleans the floor.

In this case, the two or more rags 164 may rotate in different directions and facilitate the user's manipulation. For example, when viewed from the top side, the right rag 164 may rotate clockwise (CW), and the left rag 1641 may rotate counterclockwise (CCW). Therefore, the pair of rags 164 may push the cleaning module 160 forward by means of a frictional force, and the user may more easily move the cleaner 100 forward.

The cleaning module 160 includes therein the water tub 162. The water tub 162 is a constituent element configured to store water therein and supply the water to the rag 164.

The water tub 162 is disposed in the cleaning module casing 161.

The water tub 162 is disposed above the rag 164. The water tub 162 may be disposed above the left rag 164. On the contrary, the water tub 162 may be disposed above the right rag 164.

The water tub 162 may be disposed above the left rag 164 or the right rag 164 and supply the water to the rag 164 by means of gravity.

The cleaning module 160 includes a heater (not illustrated). The heater is a constituent element configured to generate steam from water.

The heater is disposed in the cleaning module 160. Specifically, the heater is disposed in the cleaning module casing 161.

An upstream of the heater is connected to the water tub 162 and supplied with water from the water tub 162.

A downstream side of the heater is connected to the rag 164 and supplies steam to the rag 164.

A battery may be disposed in the cleaning module 160. In order to distinguish the battery from the first battery 140, which is provided in the cleaner 100, and a third battery 191 provided in a battery assembly 190, the battery is defined as a second battery 165. The cleaning module 160 may include a battery accommodation part (not illustrated), and the second battery 165 may be disposed in the battery accommodation part.

The battery accommodation part is coupled to one side of the cleaning module casing 161, and the battery is installed in the battery accommodation part.

With reference to FIG. 1, the second battery 165 is disposed at a left side of the cleaning module 160. In this case, the heater may be disposed at a right side of the cleaning module 160. With this arrangement, the center of gravity of the entire cleaning module 160 is disposed on the centerline A1, such that the cleaner 100 is easily manipulated.

The second battery 165 may be mounted together with the first battery 140 and operate the cleaner 100. Alternatively, the second battery 165 may be mounted together with the first battery 140 and the third battery 191 and operate the cleaner 100.

The cleaning module 160 cleans the cleaning region and selectively performs the wet cleaning or the dry cleaning. In this case, one cleaning module 160 may perform both the wet cleaning and the dry cleaning. Alternatively, the wet cleaning module 160 and the dry cleaning module 160 may be separately provided and selectively coupled to the extension tube 150.

The main body 110 is separably coupled to the cleaning module 160 and performs the dry cleaning by supplying negative pressure to the cleaning module 160. When the dry cleaning is performed, the main body 110 may be coupled to the cleaning module 160 or coupled indirectly to the cleaning module 160 through the extension tube 150.

During the dry cleaning, the handle assembly 130 is coupled to the main body 110. When the main body 110 is separated from the cleaning module 160, the handle assembly 130 is installed on the cleaning module 160 and performs the wet cleaning.

During the dry cleaning, the cleaning module 160 is coupled to the main body 110, and the handle assembly 130 is coupled to the main body 110. Alternatively, the cleaning module 160 may be coupled to the extension tube 150, the extension tube 150 may be coupled to the main body 110, and the handle assembly 130 may be coupled to the main body 110.

During the wet cleaning, the cleaning module 160 is coupled to the handle assembly 130. Alternatively, the cleaning module 160 may be coupled to the extension tube 150, and the extension tube 150 may be coupled to the handle assembly 130.

When the dry cleaning and the wet cleaning are performed simultaneously, in the same way as the dry cleaning, the cleaning module 160 is coupled to the main body 110, and the handle assembly 130 is coupled to the main body 110.

The user may easily assemble the cleaning module 160, the extension tube 150, the main body 110, and the handle assembly 130 and select the dry cleaning or the wet cleaning. In addition, during the wet cleaning, the main body 110 may be separated to reduce the weight of the assembly of the cleaner 100, thereby allowing the user to conveniently perform the cleaning operation.

The handle assembly 130 includes the handle 131 and the battery accommodation part 133. The handle 131 may be formed to be gripped. The battery accommodation part is coupled to one side of the handle 131, and the first battery 140 is installed in the battery accommodation part.

One side of the first bracket 170 is coupled to the cleaning module 160, and the other side of the first bracket 170 is coupled to the handle assembly 130.

Because the handle assembly 130 has only the handle 131, the operating part 132, and the first battery 140, the handle assembly 130 may have the minimum weight and operate the cleaner 100. Therefore, the wet cleaning may be easily performed in comparison with the related art.

The cleaner 100 may include the first battery 140 disposed in the handle assembly 130, and the second battery 165 disposed in the cleaning module 160. Alternatively, the cleaner 100 may include the first battery 140 disposed in the handle assembly 130, the second battery 165 disposed in the cleaning module 160, and the third battery 191 mounted by means of the battery assembly 190. Therefore, the increase in the operating time of the cleaner 100 or the improvement of the portability of the cleaner 100 may be selected.

While the present disclosure has been described with reference to the specific embodiments, the specific embodiments are only for specifically explaining the present disclosure, and the present disclosure is not limited to the specific embodiments. It is apparent that the present disclosure may be modified or altered by those skilled in the art without departing from the technical spirit of the present disclosure.

All the simple modifications or alterations to the present disclosure fall within the scope of the present disclosure, and the specific protection scope of the present disclosure will be defined by the appended claims.

## Claims

1. A cleaner (100) comprising:
a handle assembly (130) having a handle (131) capable of being gripped by a user, the handle assembly (130) having a coupling surface (137) provided at one side of a front surface of the handle assembly (130); and
a bracket (170, 180) having one side separably coupled to the coupling surface (137), and the other side separably coupled to a specific accessory module (160b-160d),
wherein the bracket (170, 180) comprises:
a handle coupling portion (181) separably coupled to the coupling surface (137); and
an accessory coupling portion (182) extending from the handle coupling portion (181) in a direction intersecting a direction in which the handle coupling portion (181) is coupled to the coupling surface (137), the accessory coupling portion (182) being configured such that the accessory module (160b-160d) is separably coupled to the accessory coupling portion (182).

2. The cleaner (100) of claim 1, wherein the handle assembly (130) comprises a support surface (135) disposed to be spaced apart from the coupling surface (137) and configured to support one side of the accessory module (160b-160d), and
wherein the accessory module (160b-160d) is supported on at least two points on the handle assembly (130).

3. The cleaner (100) of claim 2, wherein the support surface (135) supports the accessory module (160b-160d) in a direction intersecting a direction in which the accessory module (160b-160d) is coupled to the accessory coupling portion (182).

4. The cleaner (100) of claim 2, wherein the support surface (135) is disposed rearward of the coupling surface (137) when viewed from a lateral side.

5. The cleaner (100) of claim 1, wherein the handle assembly (130) comprises a bracket catching portion (136) protruding forward from the coupling surface (137) and at least partially inserted into the bracket (170, 180).

6. The cleaner (100) of claim 5, wherein the bracket catching portion (136) extends in parallel with an extension direction of the accessory coupling portion (182) when viewed from a front side.

7. The cleaner (100) of claim 1, wherein the accessory module (160b-160d) comprises:
an output part (190); and
a rotary motor (191) configured to rotate the output part (190) about a rotary shaft.

8. The cleaner (100) of claim 1, wherein the accessory module (160b-160d) comprises:
an output part (190); and
a vibration generator (192) configured to generate a vibration and apply the vibration to the output part (190).

9. The cleaner (100) of claim 1, wherein the accessory module (160b-160d) comprises:
an output part (190); and
a heater (193) configured to generate heat and apply the heat to the output part (190).

10. A cleaner (100) comprising:
a handle assembly (130) having a handle (131) capable of being gripped by a user, the handle assembly (130) having a coupling surface (137) provided at one side of a front surface of the handle assembly (130);
a bracket (170, 180) having one side separably coupled to the coupling surface (137), and the other side separably coupled to a specific accessory module (160b-160d); and
an accessory module (160b-160d) having one side coupled to the bracket (170, 180), and the other side supported by the handle assembly (130),
wherein the handle assembly (130) comprises a support surface (135) disposed on a front surface of the handle assembly (130), disposed to be spaced apart from the coupling surface (137), and configured to support one side of the accessory module (160b-160d).

11. The cleaner (100) of claim 10, wherein the bracket (170, 180) comprises:
a handle coupling portion (181) separably coupled to the coupling surface (137); and
an accessory coupling portion (182) extending from the handle coupling portion (181) toward the support surface (135) and configured such that the accessory module (160b-160d) is separably coupled to the accessory coupling portion (182).

12. The cleaner (100) of claim 10, wherein the support surface (135) is disposed rearward of the coupling surface (137) when viewed from a lateral side.

13. The cleaner (100) of claim 10, wherein the handle assembly (130) comprises a bracket catching portion (136) protruding forward from the coupling surface (137) and at least partially inserted into the bracket (170, 180).

14. The cleaner (100) of claim 13, wherein the bracket catching portion (136) extends toward the support surface (135).
